# EUROPÄISCHE PATENTSCHRIFT

(11) **EP 4 457 119 B1**
(45) Veröffentlichungstag und Bekanntmachung des Hinweises auf die Patenterteilung: **12.11.2025**
(21) Anmeldenummer: 23707002.4
(22) Anmeldetag: 09.02.2023
(51) Int. Cl.: B60N 2/30, B61D 33/00, A47C 7/56, B60N 2/02

(54) **KLAPPSITZ FÜR EIN FAHRZEUG**
FOLDING SEAT FOR A VEHICLE
SIÈGE PLIANT POUR VÉHICULE

(30) Priorität: 11.02.2022 AT 500892022
(43) Veröffentlichungstag der Anmeldung: 06.11.2024
(73) Patentinhaber: Siemens Mobility Austria GmbH, 1210 Wien (AT)
(72) Erfinder: KOLLMANN, Martin, 1030 Wien (AT); ULREICH, Klaus, 7425 Wiesfleck (AT)
(74) Vertreter: Siemens Patent Attorneys
(86) Internationale Anmeldenummer: PCT/EP2023/053251
(87) Internationale Veröffentlichungsnummer: WO 2023/152257

(56) Entgegenhaltungen:
- WO-A1-2007/141054
- KR-A- 20170 075 226
- US-A- 776 044

## Beschreibung

### Technisches Gebiet

Die Erfindung betrifft einen Klappsitz für die Anordnung in einem Fahrzeug, insbesondere ein Schienenfahrzeug.

### Stand der Technik

Der Innenraum von Passagierschienenfahrzeugen ist typischerweise mit Sitzgelegenheiten ausgestattet, wobei in Abhängigkeit vom erwarteten Passagieraufkommen und der Passagierwechselfrequenz diese Sitzgelegenheiten unterschiedlich ausgestaltet sind. Bei Schienenfahrzeugen für den Fernverkehr sind die Passagiersitze typischerweise reihenartig angeordnet und als jeweils einen bis drei Sitze umfassende Sitzgruppen ausgeführt. Ältere Fahrzeuge sind noch in Abteilbauweise aufgebaut, wobei typischerweise sechs Sitze in zwei einander zugewandten Gruppen in einem Abteil vorgesehen sind. Fahrzeuge für den Nahverkehr, beispielsweise Straßen- oder U-Bahnen weisen meist Einzelsitze, Doppelsitze bzw. Sitzgruppen mit vier Plätzen auf. Bei Fahrzeugen für ein besonders hohes Passagieraufkommen werden mehr Steh- als Sitzplätze vorgesehen und die Sitzplätze oft längs, entlang der Außenwände angeordnet. Solcherart besteht im Passagierraum ein besonders großer Stehbereich, sodass die Passagierdichte deutlich gegenüber einem hauptsächlich mit Sitzplätzen ausgestatteten Fahrzeug erhöht werden kann. Ist dies für das erwartete Passagieraufkommen noch nicht ausreichend, so können diese längs angeordneten Sitze als Klappsitze ausgeführt werden, welche in den Spitzenzeiten des Passagieraufkommens weggeklappt werden und der so frei gewordene Raum effizienter für stehende Passagiere genutzt werden kann. Dabei wird typischerweise eine um eine horizontale Achse schwenkbare Sitzplatte an der Innenseite der Außenwand angeordnet. Dabei kann der Klappsitz nach Art der in Kinos und Theatern gebräuchlichen Klappsitze so ausgeführt sein, dass die Sitzplatte unter dem Einfluß der Schwerkraft oder einer Feder selbsttätig in die vertikale Lage schwenkt, zur Benützung also durch den Passagier heruntergeklappt werden kann. Soll dies zu bestimmen Zeiten unterbunden werden, so können Klappsitze auch in vertikaler, verstauter Position der Sitzplatte blockiert werden, sodass der Raum für stehende Passagiere vergrößert wird. Dieser Vorgang muß bei bekannten Lösungen manuell ausgeführt werden. Es ist möglich, den Klappvorgang mittels eines Kraftantriebs auszuführen, wobei jedoch aufwendige Getriebe einzusetzen sind. Aus dem Stand der Technik ist kein Antrieb für einen Klappsitz bekannt, welcher den Klappvorgang einfach und insbesondere ohne Übertragung der Kraftwirkung von dem Wagenkasten auf die Sitzplatte ausführen kann. Die WO2007/141054 zeigt einen Klappsitz für ein Fahrzeug, umfassend eine Sitzplatte, welche um eine Drehachse zwischen einer Gebrauchslage und einer vertikalen Lage schwenkbar ist.

### Darstellung der Erfindung

Der Erfindung liegt daher die Aufgabe zugrunde, einen Klappsitz anzugeben, dessen Sitzplatte mittels eines Kraftantriebs zwischen einer Ruheposition und einer Benutzungsposition in beiden Richtungen bewegbar ist.

Die Aufgabe wird durch einen Klappsitz mit den Merkmalen des Anspruchs 1 gelöst. Vorteilhafte Ausgestaltungen sind Gegenstand untergeordneter Ansprüche.

Dem Grundgedanken der Erfindung nach wird ein Klappsitz für ein Fahrzeug, umfassend eine Sitzplatte, welche um eine Drehachse zwischen einer Gebrauchslage und einer vertikalen Lage schwenkbar ist, beschrieben, wobei im Inneren der Sitzplatte ein mittels eines Kraftantriebs verschiebbares Gewicht beweglich angeordnet ist, wobei in einer ersten Endposition des Gewichts die Sitzplatte durch den Einfluß der Schwerkraft selbsttätig in die Gebrauchslage schwenkt in einer zweiten Endpostion des Gewichts die Sitzplatte durch den Einfluß der Schwerkraft selbsttätig in die vertikale Lage schwenkt.

Dadurch ist der Vorteil erzielbar, eine selbsttätige Bewegung der Sitzplatte bewirken zu können. Insbesondere ist es vorteilhaft, dass diese Bewegung durch die Verschiebung ihres Massenschwerpunkts durch das Verschieben des Gewichts erfolgt und somit ein von außerhalb der Sitzplatte einwirkender Kraftantrieb entfällt. Es ist ausschließlich die Zuführung von elektrischer Energie in das Innere der Sitzplatte erforderlich, jegliche Arten von Getrieben oder Kraftübertragungen, etwa mittels Seilzüge oder Stangen sind nicht erforderlich. Dadurch ist auch kein Verschleiß dieser Einrichtungen oder deren Beschädigung, wie sie in öffentlichen Verkehrsmitteln häufig vorsätzlich erfolgt, ausgeschlossen.

Erfindungsgemäß ist in einer um eine horizontale Drehachse schwenkbare Sitzplatte vorgesehen, welche zwischen einer horizontalen Gebrauchslage, in welcher die Sitzplatte zur Benutzung durch Sitzen geeignet ist und einer im Wesentlichen vertikalen Lage, in welcher die Sitzplatte nicht zur Benutzung durch Sitzen geeignet ist, schwenkbar ist. In der Gebrauchslage ist die Sitzplatte durch geeignete Endanschläge gestützt, sodass das bei der Benutzung auf sie einwirkende Gewicht in eine Struktur, an welcher die Sitzplatte angeordnet ist, eingeleitet werden kann.

Im Inneren der Sitzplatte ist ein Gewicht schiebbar angeordnet, welches mittels eines Kraftantriebs entlang eines bestimmten Wegs verschiebbar ist. Durch dieses verschiebbar gelagerte Gewicht ist die Lage des Massenschwerpunkts der Sitzplatte in einem bestimmten Bereich verschiebbar. Es ist wesentlich, dass die Drehachse so angeordnet ist, dass in einem bestimmten Bereich des Verschiebewegs des Gewichts der Massenschwerpunkt der Sitzplatte zwischen der Vorderkante der Sitzplatte und der Drehachse zu liegen kommt. Entlang dieses Verschiebewegs bildet sich somit ein auf die Sitzplatte wirkendes Drehmoment aus, welches diese in Richtung ihrer Gebrauchsposition schwenkt, bis diese erreicht ist und die weitere Bewegung durch die Endanschläge unterbunden wird.

Befindet sich das Gewicht in dem weiteren Abschnitt seines Verschiebewegs, so kommt der Massenschwerpunkt der Sitzplatte zwischen der Hinterkante der Sitzplatte und der Drehachse zu liegen. Dadurch bildet sich ein auf die Sitzplatte wirkendes Drehmoment aus, welches diese in Richtung ihrer vertikalen, d.h. verstauten Position schwenkt.

Solcherart kann die Sitzplatte sowohl in die Gebrauchslage als auch in die verstaute Position geschwenkt werden und beliebig oft in die jeweils andere Endposition.

Ein erfindungsgemäßer Klappsitz kann mit Lagerungen ausgestattet sein, mittels welchen die Sitzplatte an eine beliebige Struktur, typischerweise einen Wagenkasten eines Fahrzeugs angebunden ist und welche die auf die Sitzplatte einwirkenden Kräfte aufnehmen und an diese Struktur übermitteln. Diese Lagerungen umfassen geeignete Schwenklager zum Erzielen der Schwenkbewegung der Sitzplatte und können mit Anschlägen zur Begrenzung des Schwenkwinkels ausgestattet sein, sodass die Sitzplatte in ihrer Gebrauchslage an einer weiteren Schwenkbewegung, über die Gebrauchslage hinweg, gehindert ist. Die Lagerungen können dabei zur lösbaren Befestigung, insbesondere zur Schraubbefestigung an einer Struktur, insbesondere einer vertikalen Wand eines Wagenkastens ausgebildet sein. Besonders vorteilhaft ist es, die Lagerungen so auszubilden, dass durch sie die Zuführung elektrischer Energie zu dem Kraftantrieb im Inneren der Sitzplatte gegeben ist. Dabei kann diese Zuführung durch das Innere eines Schwenklagers erfolgen, sodass diese Zuführung nicht sichtbar und dem Zugriff durch Unbefugte entzogen ist, sodass auch keine vorsätzliche Beschädigung dieser Zuleitung möglich ist.

Der Kraftantrieb zur Bewegung des Gewichts ist vorteilhafterweise als elektrischer Motor auszuführen, da diese Energieform in Fahrzeugen üblicherweise zur Verfügung steht und Vorteile gegenüber anderen Energieformen, wie Druckluft oder Hydraulik, bezüglich Regelbarkeit und Flexibilität der Zuführung bietet und auch deutlich preisgünstigere Antriebe ermöglicht. Der Leistungsbedarf zur Verschiebung des Gewichts ist äußerst gering und kann mittels sehr kleiner Elektromotore erfolgen.

Das Gewicht ist im Inneren der Sitzplatte mittels einer Führung geeignet schiebbar zu lagern, wobei zur Übertragung der Kraftwirkung des Kraftantriebs auf das Gewicht unterschiedliche Mittel eingesetzt werden können. Gemäß einer bevorzugten Ausführungsform ist dazu ein Seilzug einzusetzen, welcher den elektrischen Kraftantrieb mit dem Gewicht verbindet. Eine weitere vorteilhafte Ausführungsform sieht eine von dem Kraftantrieb bewegte Gewindestange vor, an welcher das Gewicht über eine Mutter angebunden ist und somit zwischen seinen Endpositionen verschiebbar ist. Diese Ausführungsform ist besonders einfach und betriebssicher, da durch die Anordnung der Gewindestange im Inneren der Sitzplatte diese vor Verschmutzung geschützt ist und die Gewindestange selbst einen Teil der Führung des Gewichts darstellt und zur Einleitung der Gewichtskraft auf die Sitzplatte geeignet ist. Somit können weitere Teile der Führung wesentlich einfacher gestaltet werden, da sie nur das Verdrehen des Gewichts um die Gewindestange sicherstellen müssen.

Eine vorteilhafte Weiterentwicklung der Erfindung sieht vor, den Klappsitz mit einer Blockiervorrichtung auszustatten, welche ein manuelles Schwenken der Sitzplatte in die Gebrauchslage verhindert. Dies ist vorteilhaft, wenn beispielsweise bei zu erwartender hoher Auslastung des Verkehrsmittels möglichst viele Stehplätze zur Verfügung gestellt werden sollen und dazu die Benutzung der Klappsitze verhindert werden soll. Ohne Blockiervorrichtung ist die Sitzplatte frei beweglich und kann jederzeit aus der verstauten Position manuell in den Gebrauchslage geschwenkt werden. Auch wenn das Gewicht sich in der hinteren, der verstauten Position der Sitzplatte entsprechenden Position befindet, ist es möglich die Sitzplatte zu schwenken und zu benutzen. Dies entspricht der Funktion der in Theatern oder Kinos gebräuchlichen Klappsitze. Eine Erfindungsgemäße Blockiervorrichtung verhindert das Schwenken aus der verstauten Position in Richtung der Gebrauchsposition, wozu beispielsweise die Drehachse in der Lagerung blockierbar gestaltet werden kann.

Da davon auszugehen ist, dass Passagiere versuchen werden, die Sitzplatte zu schwenken und dabei beträchtliche Kräfte auf diese einwirken können, ist es vorteilhaft, die Blockiervorrichtung so anzuordnen, dass diese Kräfte möglichst verteilt in die, den Klappsitz tragende Struktur einleiten. Dabei ist es besonders vorteilhaft, die Blockiervorrichtung nahe der vorderen Kante der Sitzplatte anzuordnen, da solcherart die Drehachse von einem Großteil der einzuleitenden Kräfte befreit ist und einwirkende Kräfte unmittelbar von der Sitzplatte über die Blockiervorrichtung in die, den Klappsitz tragende Struktur eingeleitet werden. Dazu kann diese Struktur so ausgebildet werden, dass die Sitzplatte in ihrer verstauten Position möglichst in einer Ausnehmung zu liegen kommt, sodass eine Krafteinleitung erschwert ist.

Für einen optimalen Betriebsablauf eines Verkehrsmittels mit einem erfindungsgemäßen Klappsitz ist es vorteilhaft, die Bedienung der Blockiervorrichtung automatisiert auszuführen, wobei die Blockiervorrichtung bei Erreichen der vertikalen Lage der Sitzplatte automatisch in Wirkung gerät und im Verlauf der Bewegung des Gewichts in Richtung seiner ersten Endposition automatisch gelöst wird. Solcherart ist der Vorteil erzielbar, eine Blockierung und Lösung der Sitzplatte automatisch mit der Bewegung des Gewichts in der Sitzplatte ausführen zu können. Insbesondere vorteilhaft ist dabei, dass zu der Blockiervorrichtung keinerlei Leitungen, wie z.B. elektrische Leitungen zur Ansteuerung eines Elektromagneten geführt werden müssen. Der Blockiervorgang und das Lösen der Blockierung erfolgt dabei ausschließlich durch die Bewegung des Gewichts im Inneren der Sitzplatte.

Die Blockiervorrichtung kann gemäß einer vorteilhaften Ausführungsform mit mindestens einer Aufnahme gestaltet werden, welche zur Anordnung an einer vertikalen Wand ausgebildet ist, wobei in blockiertem Zustand der Sitzplatte mindestens ein Bolzen aus der Sitzplatte in die Aufnahme geschoben ist. Die Aufnahme ist zur Anordnung, insbesondere zur lösbaren Befestigung an einer vertikalen Wand einer den Klappsitz tragenden Struktur auszugestalten, in welche ein Bolzen einschiebbar ist, welcher in der Sitzplatte schiebbar gelagert ist und welcher durch die Bewegung des Kraftantriebs Ein- und Ausschiebbar ist, wobei der Bolzen in seiner ausgeschobenen Position in die Aufnahme eingreift und die Sitzplatte mit der Aufnahme formschlüssig verbindet. Gerät die Sitzplatte in ihre verstaute Position, so kann am Ende des Bewegungsablaufs des Gewichts in Richtung seiner zweiten Endposition der Bolzen aus der Sitzplatte in die Aufnahme geschoben werden. Zum Lösen der Blockierung wird der Bolzen beim Beginn des Bewegungsablaufs des Gewichts in Richtung seiner ersten Endposition gelöst und die Sitzplatte schwenkt in ihre Gebrauchslage, sobald die Schwerpunktlage außerhalb der Drehachse zu liegen kommt.

Eine bevorzugte Ausführungsform der Erfindung sieht vor, die Blockiervorrichtung an den Lagerungen anzuordnen, wobei in blockiertem Zustand der Sitzplatte mindestens ein Bolzen aus der Sitzplatte in die Aufnahme geschoben ist. Dies ist vorteilhaft, wenn die Blockiervorrichtung nicht an der Vorderkante der Sitzplatte anordenbar ist, trotzdem jedoch eine Blockierfunktion gefordert ist.

Zur Bewegung des in der Sitzplatte schiebbar gelagerten Bolzens ist die vom Kraftantrieb aufgebrachte Kraft eingesetzt, wobei die Übertragung dieser Kraft auf den Bolzen gemäß einer Ausführungsform über einen Bowdenzug bewirkt wird. Solcherart ist eine Anordnung des Bolzens sehr flexibel gegeben, da über einen Bowdenzug alle möglichen Befestigungsorte des Bolzens im Inneren der Sitzplatte leicht erreicht werden können.

Eine weitere vorteilhafte Kraftübertragung an den Bolzen kann mittels einer Zug-Druckstange bewirkt werden. Diese Art der Kraftübertragung ist gegenüber einem Bowdenzug verschleißärmer.

Des Weiteren ist es vorteilhaft die Bewegung des Bolzens mittels der vom Kraftantrieb aufgebrachten Kraft über eine elastische Einrichtung zu bewirken. Dies kann dadurch erfolgen, dass das Gewicht am Ende seines Bewegungsablaufs in Richtung der hinteren Kante der Sitzplatte in Kontakt mit einer Feder, beispielsweise einer Blattfeder gerät und diese dabei so verformt, dass die Feder den Bolzen in seine ausgefahrene Position schiebt. Diese Ausführungsform ermöglicht die Bewegung des Bolzens mit einer geringen Anzahl von Bauteilen zu gewährleisten und ist besonders verschleißarm.

Eine weitere bevorzugte Ausführungsform der Erfindung sieht vor, die Sitzplatte in ihrer Gebrauchslage blockierbar zu gestalten. Dabei ist die Blockiervorrichtung so zu gestalten, dass ein Bolzen am Ende des Bewegungsablaufs des Gewichts in Richtung der vorderen Kante der Sitzplatte in seine ausgefahrene Position ausgefahren wird. Die Aufnahme ist dabei vorzugsweise an den Lagerungen anzuordnen.

Ein erfindungsgemäßer Klappsitz kann mit einer Sitzplatte ausgestattet sein, welche einen Einzelsitz bildet, oder auch als Mehrfachsitz ausgebildet sein. Solcherart ist es möglich beispielsweise eine Reihe von Längssitzen an der Innenwand eines Verkehrsmittels gemeinsam zwischen einer Ruhelage und einer Gebrauchsposition kraftunterstützt schwenkbar zu gestalten.

Erfindungsgemäß kann ein Fahrzeug, insbesondere ein Schienenfahrzeug geschaffen werden, welches mindestens einen erfindungsgemäßen Klappsitz umfasst.

### Kurzbeschreibung der Zeichnungen

Es zeigen beispielhaft:
**Fig.1** Klappsitz in vertikaler Lage der Sitzplatte.
**Fig.2** Klappsitz in vertikaler Lage der Sitzplatte, Seitenansicht.
**Fig.3** Klappsitz in Gebrauchslage der Sitzplatte, Seitenansicht.
**Fig.4** Klappsitz mit Blockiervorrichtung mit Stangenantrieb, gelöst.
**Fig.5** Klappsitz mit Blockiervorrichtung mit Stangenantrieb, blockiert.
**Fig.6** Klappsitz mit Blockiervorrichtung mit elastischer Einrichtung, gelöst.
**Fig.7** Klappsitz mit Blockiervorrichtung mit elastischer Einrichtung, blockiert.
**Fig.8** Klappsitz mit Blockiervorrichtung mit Bowdenzug, gelöst.
**Fig.9** Klappsitz mit Blockiervorrichtung mit Bowdenzug, blockiert.

### Ausführung der Erfindung

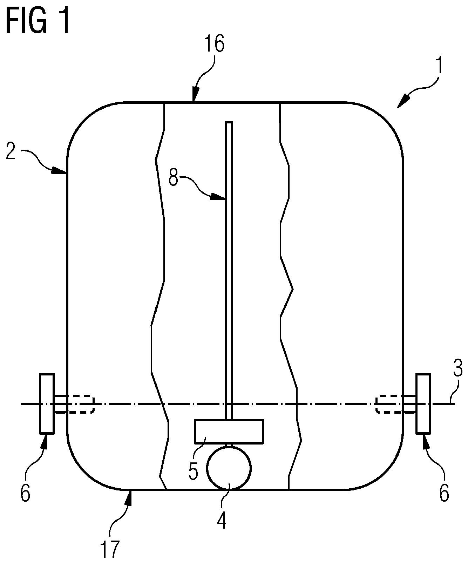

**Fig.1** zeigt beispielhaft und schematisch einen Klappsitz in vertikaler Lage der Sitzplatte. Es ist ein Klappsitz 1 dargestellt, welcher eine Sitzplatte 2 und zwei Lagerungen 6 umfasst, wobei die Sitzplatte 2 um eine horizontale Drehachse 3 schwenkbar angeordnet ist. Die Sitzplatte 2 und die Lagerungen 6 sind dazu jeweils mit geeigneten Schwenklagern ausgestattet. Die Sitzplatte 2 befindet sich in vertikaler, d.h. verstauter Position, in welcher die Vorderkante 16 der Sitzplatte 2 nach oben orientiert ist und die Hinterkante 17 der Sitzplatte nach unten. Die Sitzplatte 2 ist teilweise geschnitten dargestellt, sodass die im Inneren der Sitzplatte 2 befindlichen Bauteile sichtbar sind. Im Inneren der Sitzplatte 2 ist eine Gewindestange 8, welche sich zwischen der Vorderkante 16 und der Hinterkante 17 erstreckt angeordnet. Durch diese Gewindestange 8 ist ein Gewicht 5 bewegbar, wozu das Gewicht 8 mit einer Mutter ausgestattet ist, die in das Gewinde der Gewindestange 8 eingreift. Ein Kraftantrieb 4 ist zum Antrieb der Gewindestange 8 in beide Drehrichtungen eingerichtet, sodass die Wirkung dieses Kraftantriebs 4 das Gewicht 8 stufenlos zwischen einer ersten und einer zweiten Endposition verschieben kann. In Fig.1 ist das Gewicht 8 in seiner zweiten Endposition gezeigt, in welcher der Massenschwerpunkt der Sitzplatte so zu liegen kommt, dass die Sitzplatte 2 unter dem Einfluß der Schwerkraft in die vertikale Lage schwenkt. Der Kraftantrieb ist als elektrischer Motor ausgeführt, dessen Zuleitungen vorzugsweise über eine der Lagerungen 6 und die Drehachse 3 geführt sind, sodass sie von außen nicht sichtbar sind.

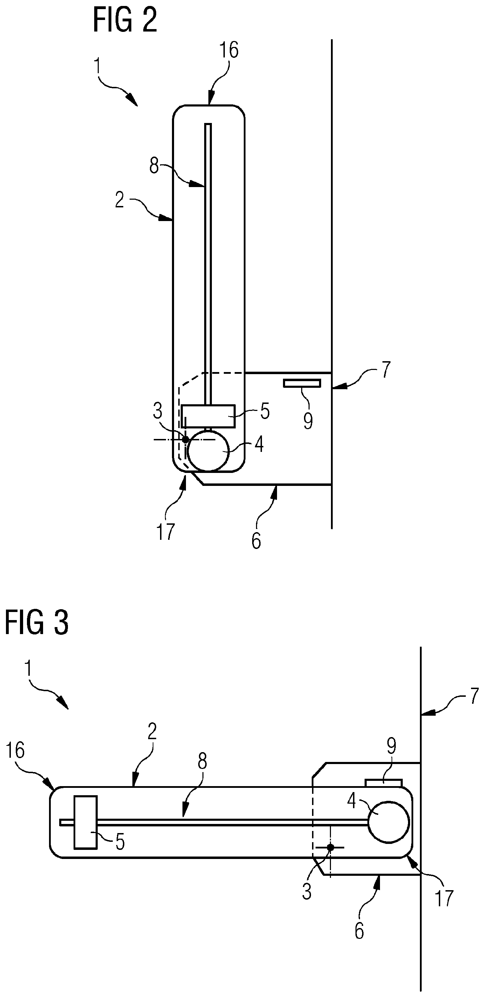

**Fig.2** zeigt beispielhaft und schematisch einen Klappsitz in vertikaler Lage der Sitzplatte in einer Seitenansicht. Es ist der Klappsitz 1 aus Fig.1 in einem seitlichen Schnitt dargestellt. Dabei ist ersichtlich, dass die Lagerungen 6 an einer vertikalen Wand 7 befestigt sind, beispielsweise einer Seitenwand eines Schienenfahrzeugs. Des Weiteren umfassen die Lagerungen 6 mindestens einen Anschlag 9, welcher die Drehbewegung der Sitzplatte 2 bei im Wesentlichen horizontaler Lage blockiert, sodass die Sitzplatte nicht darüber hinaus geschwenkt werden kann. Diese horizontale Lage stellt die Gebrauchslage der Sitzplatte 2 dar. Wird die Sitzplatte 2 eines Klappsitzes 1, wie in Fig. 2 dargestellt, manuell in Gebrauchslage geschwenkt, so schwenkt sie anschließend selbsttätig in die vertikale Lage zurück.
**Fig.3** zeigt beispielhaft und schematisch einen Klappsitz in Gebrauchslage der Sitzplatte in einer Seitenansicht. Es ist der Klappsitz 1 aus Fig.2 dargestellt, wobei das Gewicht 5 in Richtung der Vorderkante 16 der Sitzplatte 2 geschoben ist, der Massenschwerpunkt der Sitzplatte 2 also so zu liegen kommt, dass die Sitzplatte 2 unter dem Einfluß der Schwerkraft in die horizontale Lage, d.h. die Gebrauchslage schwenkt. Wird die Sitzplatte 2 eines Klappsitzes 1, wie in Fig. 3 dargestellt, manuell in die vertikale Lage geschwenkt, so schwenkt sie anschließend selbsttätig in die Gebrauchslage zurück.

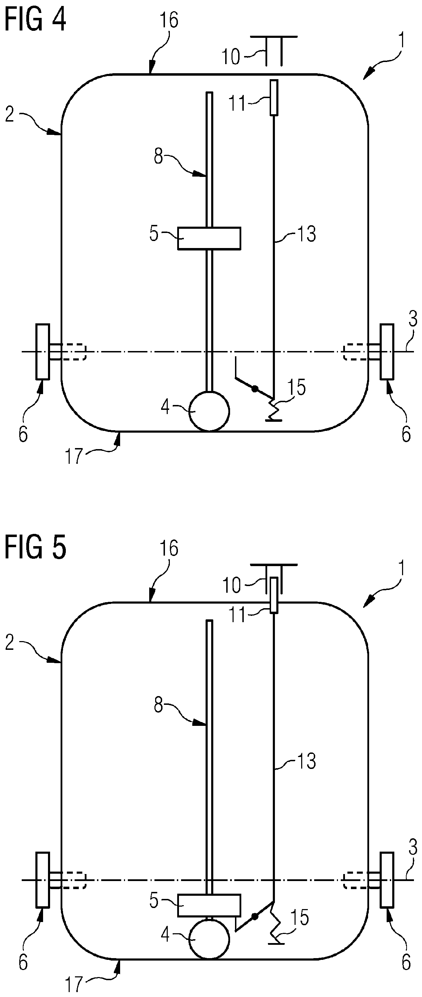

**Fig.4** zeigt beispielhaft und schematisch einen Klappsitz mit einer Blockiervorrichtung mit Stangenantrieb in gelöster Stellung. Es ist ein Klappsitz 1, ähnlich der in den Fig. 1 bis 3 dargestellten Ausführungsform gezeigt, welcher zusätzlich mit einer Blockiervorrichtung ausgestattet ist. Diese Blockiervorrichtung umfasst eine Aufnahme 10, welche zur Befestigung an einer Wand, insbesondere einer Seitenwand eines Schienenfahrzeugs ausgebildet ist. Um die Sitzplatte 2 gegenüber dieser Aufnahme 10 und somit auch der Wand formschlüssig zu blockieren ist ein in der Sitzplatte 2 schiebbar angeordneter Bolzen 11 vorgesehen, dessen Position durch die Position des Gewichts 5 vorgegeben ist. Die Positionen des Bolzens 11 und des Gewichts 5 sind zueinander synchron, wobei nur in der Endlage des Gewichts 5 an der Hinterkante 17 der Bolzen vollständig ausgefahren ist. Dazu ist eine Zug-Druckstange 13 so im Inneren der Sitzplatte 2 angeordnet, dass im letzten Bewegungsabschnitt des Gewichts 5, vor dem Erreichen der zweiten Endposition des Gewichts 5, der Ausfahrvorgang des Bolzens beginnt und bei Erreichen der zweiten Endposition des Gewichts 5 abgeschlossen ist. In diesem letzten Bewegungsabschnitt des Gewichts 5 ist die Sitzplatte 2 bereits in vertikaler Lage und die Ausfahrachse des Bolzens 11 fluchtet mit der Aufnahme 10. In Fig.4 ist das Gewicht 5 in einer Zwischenstellung zwischen seiner ersten und zweiten Endposition dargestellt, in welcher der Bolzen 11 noch nicht ausgefahren sein soll. Zum Zurückziehen des Bolzens 11 in allen Positionen des Gewichts 5, in welchen der Bolzen 11 nicht ausgefahren sein soll, ist eine Feder 15 vorgesehen, welche auf die Zug-Druckstange 13 wirkt und den Bolzen 11 in die Sitzplatte 2 zurückzieht.
**Fig.5** zeigt beispielhaft und schematisch einen Klappsitz mit einer Blockiervorrichtung mit Stangenantrieb in blockierter Stellung. Es ist das Ausführungsbeispiels aus Fig.4 dargestellt, wobei das Gewicht 5 sich in seiner zweiten Endposition in Richtung der Hinterkante 17 der Sitzplatte 2 befindet. Dabei tritt des Gewicht 5 in Kontakt mit einer Umlenkvorrichtung der Zug-Druckstange 13 und überwindet die von der Feder 15 aufgebrachte Kraft und bewegt den Bolzen 11 aus der Sitzplatte 2 heraus.

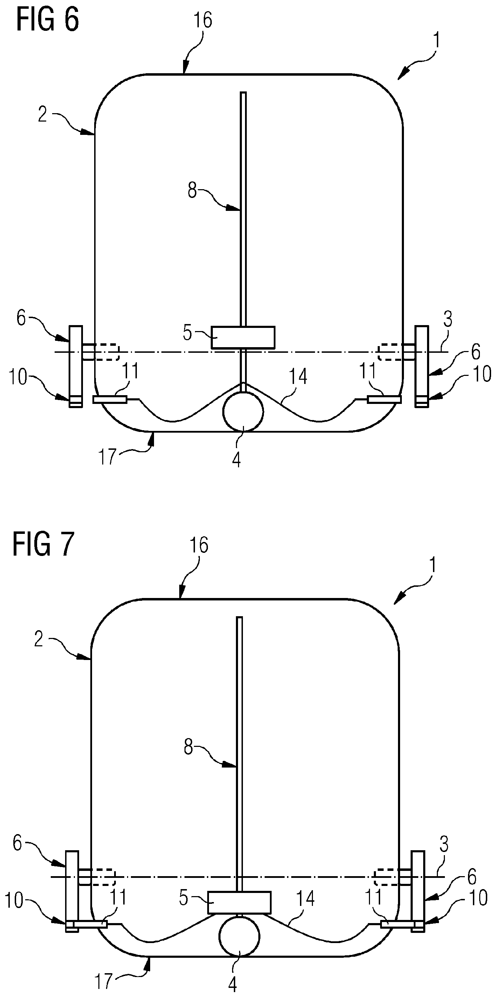

**Fig.6** zeigt beispielhaft und schematisch einen Klappsitz mit einer Blockiervorrichtung mit elastischer Einrichtung in gelöster Position. Es ist eine weitere Ausführungsform einer Blockiervorrichtung dargestellt, welche insbesondere bei Anwendungsfällen, bei welchen die Aufnahme 10 nicht unmittelbar an einer Wand angeordnet werden kann, einsetzbar ist. Dabei ist die Aufnahme 10 an den Lagerungen 6 vorzusehen und die Bolzen 11 Nahe der Hinterkante 17 der Sitzplatte 2 parallel zu der Drehachse schiebbar anzuordnen. Es ist besonders vorteilhaft, bei dieser Ausführungsform zwei Bolzen 11 einzusetzen, da solcherart die Verteilung der Scherkraft optimiert ist und eine unsymmetrische Krafteinleitung in nur eine der beiden Lagerungen 6 verhindert wird. Die Übertragung der Bewegung des Gewichts 5 auf die Bolzen 11 erfolgt mittels einer Elastischen Einrichtung 14, welche beispielsweise als Blattfeder ausgebildet ist und solcherart auch die Rückstellkraft auf die Bolzen 11 bewirkt. In Fig. 6 ist da Gewicht in einer Zwischenstellung zwischen seiner ersten und zweiten Endposition dargestellt, wobei dabei die Bolzen 6 durch die Elastische Einrichtung 14 zurückgezogen sind und die Sitzplatte 2 frei schwenkbar ist.
**Fig.7** zeigt beispielhaft und schematisch einen Klappsitz mit einer Blockiervorrichtung mit elastischer Einrichtung in blockierter Position. Es ist das Ausführungsbeispiel aus Fig. 6 dargestellt, wobei das Gewicht 5 sich in seiner zweiten Endposition befindet und dabei mit der Elastischen Einrichtung 14 in Kontakt tritt und diese so verformt, dass die Elastischen Einrichtung 14 die Bolzen 11 in ihre ausgefahrene Position geschoben hat. Dabei ist wesentlich, dass im letzten Bewegungsabschnitt des Gewichts 5, vor dem Erreichen der zweiten Endposition des Gewichts 5, der Ausfahrvorgang des Bolzens beginnt und bei Erreichen der zweiten Endposition des Gewichts 5 abgeschlossen ist.

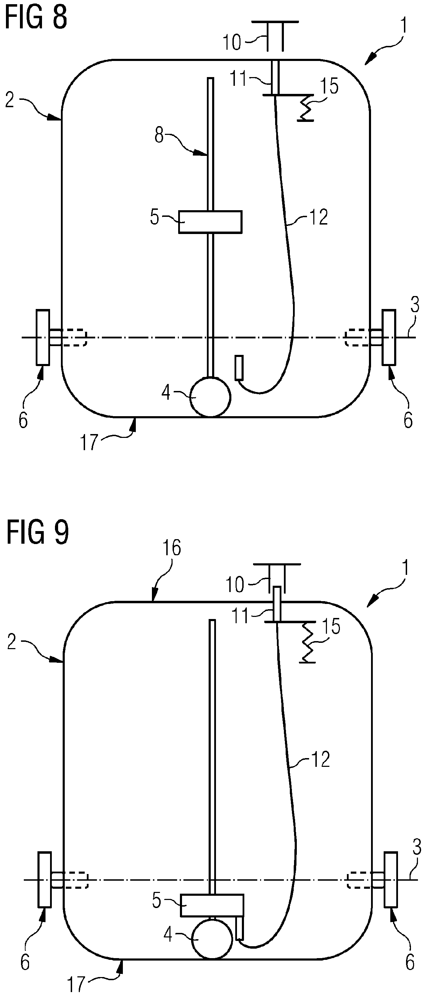

**Fig.8** zeigt beispielhaft und schematisch einen Klappsitz mit einer Blockiervorrichtung mit einem Bowdenzug in gelöster Position. Es ist eine weitere Ausführungsform einer Blockiervorrichtung dargestellt, welche einen Bowdenzug 12 einsetzt, um einen Bolzen 11 in eine Aufnahme 10 ein- und auszuschieben. Der Bolzen 11 wird dabei durch eine Feder 15 in seine eingezogene Position zurückgezogen und durch die von dem Gewicht 5 aufgebrachte Kraft am Ende des Bewegungsvorgangs des Gewichts 5 in seine zweite Endposition ausgeschoben. Ein Bowdenzug 12 erlaubt eine flexible Anordnung der Bauteile der Blockiervorrichtung innerhalb der Sitzplatte 2. Fig.8 stellt die Blockiervorrichtung 8 in gelöster Position dar, bei welcher das Gewicht 5 in einer Zwischenstellung zwischen seiner ersten und zweiten Endposition befindlich ist und der Bolzen 11 in die Sitzplatte 2 zurückgezogen ist.
**Fig.9** zeigt beispielhaft und schematisch einen Klappsitz mit einer Blockiervorrichtung mit einem Bowdenzug in blockierter Position. Es ist der Klappsitz 1 aus Fig.8 dargestellt, wobei sich das Gewicht 5 in seiner zweiten Endposition befindet und in Kontakt mit der Blockiervorrichtung ist. Dabei ist eine Druckkraft über den Bowdenzug 12 auf den Bolzen 11 übermittelt und der Bolzen 11 in die Aufnahme 10 geschoben.

### Liste der Bezeichnungen

- 1: Klappsitz
- 2: Sitzplatte
- 3: Drehachse
- 4: Kraftantrieb
- 5: Gewicht
- 6: Lagerung
- 7: Vertikale Wand
- 8: Gewindestange
- 9: Anschlag
- 10: Aufnahme
- 11: Bolzen
- 12: Bowdenzug
- 13: Zug-Druckstange
- 14: Elastische Einrichtung
- 15: Feder
- 16: Vorderkante der Sitzplatte
- 17: Hinterkante der Sitzplatte

## Patentansprüche

1. Klappsitz (1) für ein Fahrzeug, umfassend eine Sitzplatte (2), welche um eine Drehachse (3) zwischen einer Gebrauchslage und einer vertikalen Lage schwenkbar ist,
**dadurch gekennzeichnet, dass**
im Inneren der Sitzplatte (2) ein mittels eines Kraftantriebs (4) verschiebbares Gewicht (5) beweglich angeordnet ist, wobei in einer ersten Endposition des Gewichts die Sitzplatte (2) durch den Einfluß der Schwerkraft selbsttätig in die Gebrauchslage schwenkt in einer zweiten Endposition des Gewichts die Sitzplatte (2) durch den Einfluß der Schwerkraft selbsttätig in die vertikale Lage schwenkt.

2. Klappsitz (1) nach Anspruch 1,
**dadurch gekennzeichnet, dass**
Lagerungen (6) beidseitig der Sitzplatte (2) vorgesehen sind, an welchen die Sitzplatte (2) schwenkbar befestigt ist und welche die auf die Sitzplatte (2) einwirkenden Kräfte aufnehmen, wobei die Lagerungen (6) zur Befestigung an einer vertikalen Wand (7) ausgebildet sind.

3. Klappsitz (1) nach Anspruch 1 oder 2,
**dadurch gekennzeichnet, dass** der Kraftantrieb (4) als elektrischer Motor ausgebildet ist, wobei die elektrischen Leitungen zu dem Motor entlang der Drehachse (3) geführt sind.

4. Klappsitz (1) nach einem der Ansprüche 1 bis 3,
**dadurch gekennzeichnet, dass** das Gewicht (5) mittels eines Seilzugs entlang einer Führung verschiebbar ist.

5. Klappsitz (1) nach einem der Ansprüche 1 bis 3,
**dadurch gekennzeichnet, dass** das Gewicht (5) mittels einer Gewindestange (8) verschiebbar ist.

6. Klappsitz (1) nach einem der Ansprüche 1 bis 5,
**dadurch gekennzeichnet, dass** eine Blockiervorrichtung vorgesehen ist, welche ein manuelles Schwenken der Sitzplatte (2) in die Gebrauchslage verhindert.

7. Klappsitz (1) nach Anspruch 6,
**dadurch gekennzeichnet, dass** die Blockiervorrichtung bei Erreichen der vertikalen Lage der Sitzplatte (2) automatisch in Wirkung gerät und im Verlauf der Bewegung des Gewichts (5) in Richtung seiner ersten Endposition automatisch gelöst wird.

8. Klappsitz (1) nach einem der Ansprüche 6 oder 7,
**dadurch gekennzeichnet, dass** die Blockiervorrichtung mindestens eine Aufnahme (10) umfasst, welche zur Anordnung an einer vertikalen Wand (7) ausgebildet ist, wobei in blockiertem Zustand der Sitzplatte (2) mindestens ein Bolzen (11) aus der Sitzplatte (2) in die Aufnahme (10) geschoben ist.

9. Klappsitz (1) nach einem der Ansprüche 6 oder 7,
**dadurch gekennzeichnet, dass** die Blockiervorrichtung mindestens eine Aufnahme (10) umfasst, welche an den Lagerungen (6) angeordnet ist, wobei in blockiertem Zustand der Sitzplatte (2) mindestens ein Bolzen (11) aus der Sitzplatte (2) in die Aufnahme (10) geschoben ist.

10. Klappsitz (1) nach einem der Ansprüche 6 bis 9,
**dadurch gekennzeichnet, dass** die Bewegung des Bolzens (11) mittels der vom Kraftantrieb aufgebrachten Kraft über einen Bowdenzug (12) bewirkt wird.

11. Klappsitz (1) nach einem der Ansprüche 6 bis 9,
**dadurch gekennzeichnet, dass** die Bewegung des Bolzens (11) mittels der vom Kraftantrieb (4) aufgebrachten Kraft über eine Zug-Druckstange (13) bewirkt wird.

12. Klappsitz (1) nach einem der Ansprüche 6 bis 9,
**dadurch gekennzeichnet, dass** die Bewegung des Bolzens (11) mittels der vom Kraftantrieb (4) aufgebrachten Kraft über eine elastische Einrichtung (14) bewirkt wird.

13. Klappsitz (1) nach einem der Ansprüche 6 bis 12.
**dadurch gekennzeichnet, dass**
eine Blockiervorrichtung vorgesehen ist, welche die Sitzplatte (2) in ihrer Gebrauchslage blockiert.

14. Klappsitz (1) nach einem der Ansprüche 1 bis 13,
**dadurch gekennzeichnet, dass** die Sitzplatte (2) als ein Einzelsitz ausgebildet ist.

15. Klappsitz (1) nach einem der Ansprüche 1 bis 13,
**dadurch gekennzeichnet, dass** die Sitzplatte (2) als ein Mehrfachsitz ausgebildet ist.

16. Fahrzeug, insbesondere Schienenfahrzeug, umfassend
einen Klappsitz (1) gemäß einem der Ansprüche 1 bis 15.

## Claims

1. Folding seat (1) for a vehicle, comprising a seat plate (2) which can be pivoted about an axis of rotation (3) between a position of use and a vertical position,
**characterised in that**
a weight (5) which can be moved by means of a power drive (4) is movably arranged in the interior of the seat plate (2), wherein in a first end position of the weight, the seat plate (2) automatically pivots into the position of use through the effects of the force of gravity and in a second end position of the weight the seat plate (2) automatically pivots into the vertical position through the effects of the force of gravity.

2. Folding seat (1) according to claim 1,
**characterised in that**
supports (6) are provided on both sides of the seat plate (2), to which supports the seat plate (2) is pivotably fastened, and which absorb the forces acting on the seat plate (2), wherein the supports (6) are embodied for fastening on a vertical wall (7).

3. Folding seat (1) according to claim 1 or 2,
**characterised in that**
the power drive (4) is embodied as an electric motor, wherein the electrical lines to the motor are guided along the axis of rotation (3).

4. Folding seat (1) according to one of claims 1 to 3,
**characterised in that**
the weight (5) can be moved along a guide by means of a cable pull.

5. Folding seat (1) according to one of claims 1 to 3,
**characterised in that**
the weight (5) can be moved by means of a threaded rod (8).

6. Folding seat (1) according to one of claims 1 to 5,
**characterised in that**
a blocking apparatus is provided, which prevents a manual pivoting of the seat plate (2) into the position of use.

7. Folding seat (1) according to claim 6,
**characterised in that**
when the vertical position of the seat plate (2) is reached, the blocking apparatus automatically becomes effective and is automatically released in the direction of its first end position during the course of the movement of the weight (5).

8. Folding seat (1) according to one of claims 6 or 7,
**characterised in that**
the blocking apparatus comprises at least one receptacle (10), which is embodied for arrangement on a vertical wall (7), wherein in the blocked state of the seat plate (2), at least one bolt (11) is shifted out of the seat plate (2) into the receptacle (10).

9. Folding seat (1) according to one of claims 6 or 7,
**characterised in that**
the blocking apparatus comprises at least one receptacle (10) which is arranged on the supports (6), wherein in the blocked state of the seat plate (2) at least one bolt (11) is shifted out of the seat plate (2) into the receptacle (10).

10. Folding seat (1) according to one of claims 6 to 9,
**characterised in that**
the movement of the bolt (11) is effected by means of the force applied by the power drive by way of a Bowden cable (12).

11. Folding seat (1) according to one of claims 6 to 9,
**characterised in that**
the movement of the bolt (11) is effected by means of the force applied by the power drive (4) by way of a pull-push bar (13).

12. Folding seat (1) according to one of claims 6 to 9,
**characterised in that**
the movement of the bolt (11) is effected by means of the force applied by the power drive (4) by way of a resilient facility (14).

13. Folding seat (1) according to one of claims 6 to 12,
**characterised in that**
a blocking apparatus is provided, which blocks the seat plate (2) in its position of use.

14. Folding seat (1) according to one of claims 1 to 13,
**characterised in that**
the seat plate (2) is embodied as an individual seat.

15. Folding seat (1) according to one of claims 1 to 13,
**characterised in that**
the seat plate (2) is embodied as a multiple seat.

16. Vehicle, in particular rail vehicle, comprising a folding seat (1) according to one of claims 1 to 15.

## Revendications

1. Siège rabattable (1) pour véhicule, comprenant une assise (2), laquelle est pivotante autour d'un axe de rotation (3) entre une position d'utilisation et une position verticale, **caractérisé en ce qu'**un poids (5) déplaçable au moyen d'un entraînement motorisé (4) est disposé de manière mobile à l'intérieur de l'assise (2), l'assise (2) basculant automatiquement sous l'effet de la gravité vers la position d'utilisation dans une première position extrême du poids, et, l'assise (2) basculant automatiquement sous l'effet de la gravité vers la position verticale dans une seconde position extrême du poids.

2. Siège rabattable (1) selon la revendication 1, **caractérisé en ce que** des paliers (6) sont prévus des deux côtés de l'assise (2), sur lesquels l'assise (2) est fixée de manière pivotante et qui absorbent les forces agissant sur l'assise (2), les paliers (6) étant conçus pour être fixés à une paroi verticale (7).

3. Siège rabattable (1) selon la revendication 1 ou 2, **caractérisé en ce que** l'entraînement motorisé (4) est conçu comme un moteur électrique, les lignes électriques vers le moteur étant guidées le long de l'axe de rotation (3).

4. Siège rabattable (1) selon l'une quelconque des revendications 1 à 3, **caractérisé en ce que** le poids (5) est déplaçable au moyen d'un câble de traction le long d'un guide.

5. Siège rabattable (1) selon l'une quelconque des revendications 1 à 3, **caractérisé en ce que** le poids (5) est déplaçable au moyen d'une tige filetée (8).

6. Siège rabattable (1) selon l'une des revendications 1 à 5, **caractérisé en ce qu'**un dispositif de blocage est prévu, lequel empêche le pivotement manuel de l'assise (2) dans la position d'utilisation.

7. Siège rabattable (1) selon la revendication 6, **caractérisé en ce que** le dispositif de blocage entre automatiquement en action lorsque la position verticale de l'assise (2) est atteinte et est automatiquement débloquée lors du déplacement du poids (5) vers sa première position extrême.

8. Siège rabattable (1) selon l'une quelconque des revendications 6 ou 7, **caractérisé en ce que** le dispositif de blocage comprend au moins un logement (10) qui est conçu pour être disposé sur une paroi verticale (7), dans lequel, à l'état bloqué de l'assise (2), au moins un boulon (11) est poussé de l'assise (2) au logement (10).

9. Siège rabattable (1) selon l'une quelconque des revendications 6 ou 7, **caractérisé en ce que** le dispositif de blocage comprend au moins un logement (10) qui est disposé sur les paliers (6), dans lequel, à l'état bloqué de l'assise (2), au moins un boulon (11) est poussé de l'assise (2) au logement (10).

10. Siège rabattable (1) selon l'une quelconque des revendications 6 à 9, **caractérisé en ce que** le mouvement du boulon (11) est commandé par la force exercée par l'entraînement motorisé au moyen d'un câble Bowden (12).

11. Siège rabattable (1) selon l'une quelconque des revendications 6 à 9, **caractérisé en ce que** le mouvement du boulon (11) est commandé par la force exercée par l'entraînement motorisé (4) au moyen d'une tige de traction-poussée (13).

12. Siège rabattable (1) selon l'une quelconque des revendications 6 à 9, **caractérisé en ce que** le mouvement du boulon (11) est commandé par la force exercée par l'entraînement motorisé (4) au moyen d'un dispositif élastique (14).

13. Siège rabattable (1) selon l'une quelconque des revendications 6 à 12, **caractérisé en ce qu'**un dispositif de blocage est prévu, lequel bloque l'assise (2) dans sa position d'utilisation.

14. Siège rabattable (1) selon l'une quelconque des revendications 1 à 13, **caractérisé en ce que** l'assise (2) est conçue comme un siège unique.

15. Siège rabattable (1) selon l'une quelconque des revendications 1 à 13, **caractérisé en ce que** l'assise (2) est conçue comme un siège multiple.

16. Véhicule, notamment véhicule ferroviaire, comprenant un siège rabattable (1), selon l'une des revendications 1 à 15.
